# FASCICULE DE BREVET EUROPEEN

(11) **EP 2 476 593 B1**
(45) Date de publication et mention de la délivrance du brevet: **08.01.2014**
(21) Numéro de dépôt: 11150895.8
(22) Date de dépôt: 13.01.2011
(51) Int. Cl.: B60R 25/02, B62D 5/04, B62D 9/00

(54) **Procédé de protection contre le vol d'un vehicule automobile**
Verfahren zum Schutz gegen Diebstahl eines Kraftfahrzeugs
Theft protection method for an automobile

(43) Date de publication de la demande: 18.07.2012
(73) Titulaire: Valeo Sicherheitssysteme GmbH, 85253 Erdweg (DE)
(72) Inventeur: Artigues, Francois-Xavier, 85253 Erdweg (DE)
(74) Mandataire: Croonenbroek, Thomas Jakob

(56) Documents cités:
- EP-A1- 1 234 734
- EP-A2- 1 029 755
- EP-A2- 1 236 629
- DE-A1- 10 151 010
- DE-A1- 19 601 827
- US-B1- 6 268 790

## Description

L'invention concerne un procédé de protection contre le vol d'un véhicule automobile.

De façon classique, un antivol électrique de colonne de direction de véhicule automobile comporte un pêne actionnable et destiné à venir s'engager dans un des logements prévus sur la colonne lors d'un verrouillage et à être sorti de ce logement lors d'un déverrouillage. A titre d'exemple, un tel agencement est décrit dans le document de brevet EP 1 029 755.

Il est également connu du document EP 1 234 734 un procédé de protection contre le vol d'un véhicule automobile.

Par ailleurs, de nos jours, la rotation de la colonne de direction au moyen du volant est assistée au moyen d'une assistance électrique de direction, allégeant la manoeuvre du véhicule.

Actuellement, lors de l'arrêt de son véhicule automobile, le conducteur doit effectuer une légère rotation du volant, pour assurer le bon verrouillage de l'antivol de colonne de direction, après arrêt du moteur. Ceci permet le bon engagement du pêne de l'antivol de colonne de direction dans un de ses logements de la colonne, lorsqu'il est mis en butée en bordure de ce logement. Classiquement, le conducteur doit prendre soin de tourner le volant jusqu'au clic indiquant le bon verrouillage et l'immobilisation du volant. Alors l'antivol assure pleinement sa fonction, en empêchant le volant et les roues directrices de tourner. Cette intervention empêche un voleur de conduire le véhicule.

Ceci étant, il s'agit là d'une part d'une intervention manuelle du conducteur, qui peut être malencontreusement oubliée lors de l'arrêt du véhicule.

De plus, peu de conducteurs prennent la peine de tourner complètement le volant, avant d'éteindre le moteur et d'effectuer cette intervention de verrouillage, afin de braquer complètement les roues directrices et rendre difficile le déplacement du véhicule pour l'introduire dans un camion, par exemple, par traction ou poussée du véhicule.

L'objet de l'invention est de résoudre ce problème.

Pour ce faire, l'invention propose un procédé de protection contre le vol d'un véhicule automobile, consistant, à l'arrêt du moteur de ce véhicule, lors de la détection d'une intrusion dans le véhicule, à déverrouiller automatiquement et temporairement l'antivol de colonne de direction, à opérer une rotation automatique déterminée de la colonne de direction, dite de braquage et correspondante à une position braquée des roues directrices, et à verrouiller automatiquement l'antivol de colonne de direction dans une position braquée des roues directrices.

Ainsi les roues étant automatiquement braquées et l'antivol verrouillé, il est impossible au voleur de déplacer le véhicule, même par poussée ou traction.

Selon un mode de réalisation préféré de l'invention, ladite rotation de braquage de la colonne de direction du véhicule est contrôlée par une détermination du couple du volant et est arrêtée si une roue vient en butée contre un obstacle.

Très avantageusement, le véhicule automobile comportant une assistance électrique de direction, la rotation de braquage est effectuée au moyen de cette assistance électrique.

L'invention peut être ainsi mise en place sans agencement de commande supplémentaire.

De préférence, le procédé comprend également une détermination de la position du pêne de l'antivol de colonne de direction et à opérer au moyen de l'assistance électrique une rotation automatique déterminée supplémentaire de la colonne de direction, de verrouillage de l'antivol, lorsque qu'il est déterminé que le pêne n'est pas engagé dans un logement de la colonne.

De préférence, ladite rotation de verrouillage de l'antivol est déterminée en fonction de la largeur angulaire des crêtes séparant les logements de la colonne.

L'invention est décrite ci-après plus en détail à l'aide de figures illustrant un mode de réalisation préféré de l'invention.
La figure 1 illustre schématiquement le procédé conforme à l'invention.
La figure 2 est une vue schématique de détail de la colonne de direction.

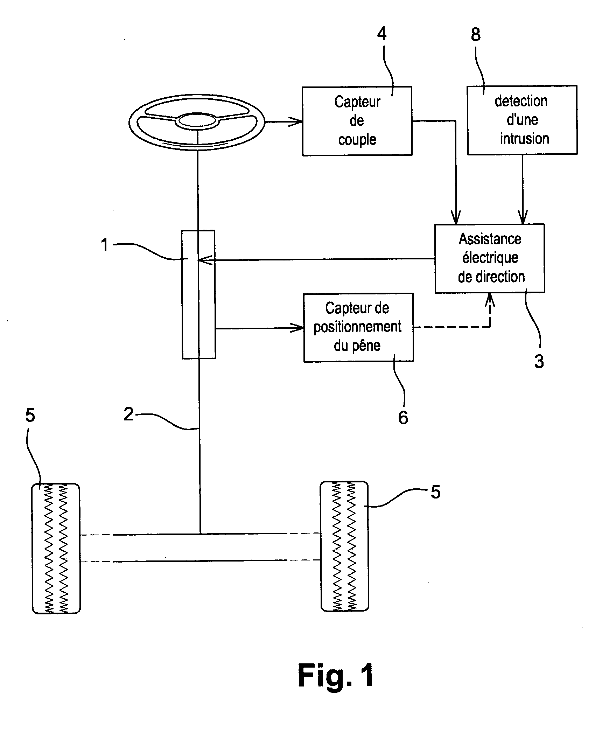

Comme illustré sur la figure 1, le procédé de protection contre le vol d'un véhicule automobile comportant une assistance électrique de direction 3, consiste, à l'arrêt du moteur de ce véhicule, lors de la détection d'une intrusion 8 dans le véhicule, à déverrouiller automatiquement et temporairement l'antivol 1 de la colonne de direction 2, connectant le volant 4 et les roues directrices 5, à opérer au moyen de cette assistance électrique 3 une rotation automatique déterminée de la colonne de direction 2, dite de braquage et correspondante à une position braquée des roues directrices 5, et à verrouiller automatiquement l'antivol 1 de colonne de direction dans une position braquée des roues directrices 5.

De manière avantageuse, la position braquée des roues est comprise entre 20° et 70°, avec une position préférée à 45°.

La détection d'une intrusion peut être effectuée par exemple au moyen d'un capteur à ultrasons, d'un capteur de force sur le cylindre d'un verrou, d'un capteur de vibration détectant des chocs d'outils contendants sur une porte ou sur le tableau de bord du véhicule, d'une détection de bris de glace, etc.

Selon un mode de réalisation préféré de l'invention, cette rotation de braquage de la colonne de direction 2 du véhicule est contrôlée par une détermination du couple du volant au moyen d'un capteur 4 et est arrêtée si une roue 5 vient en butée contre un obstacle, par exemple contre un trottoir.

De préférence, le procédé comprend également une détermination de la position du pêne de l'antivol 1 de colonne de direction au moyen d'un capteur 6 et à opérer au moyen de l'assistance électrique 3 une rotation automatique déterminée supplémentaire de la colonne de direction 2, de verrouillage de l'antivol 1, lorsque qu'il est déterminé que le pêne n'est pas engagé dans un logement de la colonne 2.

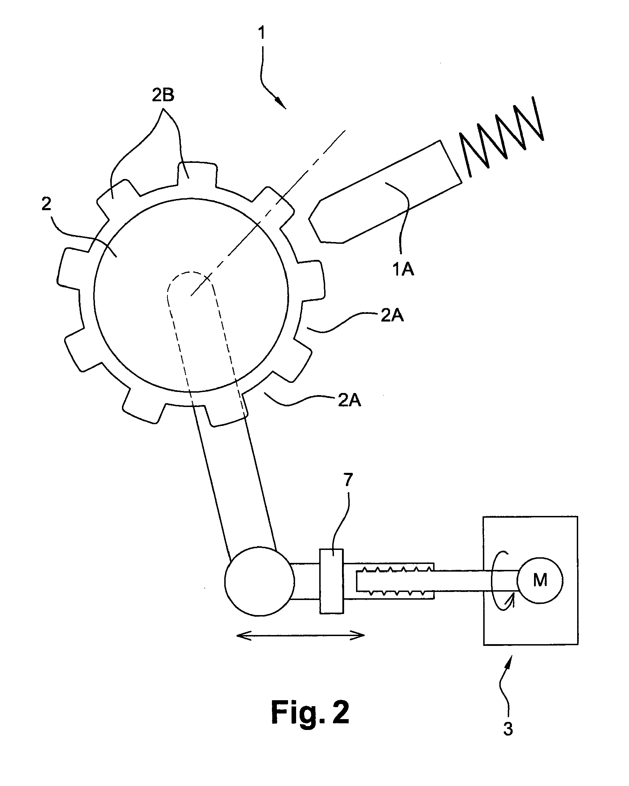

Sur la figure 2 est représentée schématiquement la colonne de direction 2 pourvu de logements 2A du pêne 1A de l'antivol 1. La colonne de direction 2 est connectée à l'assistance de direction 3 qui peut être un moteur électrique dont le déplacement en rotation de son arbre est transformé en rotation de la colonne 2 par un agencement de vis sans fin et de bielle. Cette assistance de direction 3 est pilotée au moyen d'un capteur de couple 7 du volant et de la colonne.

La rotation automatique déterminée de la colonne de direction 2 pour le verrouillage de l'antivol est donc déterminée en fonction de la configuration des logements 2A de la colonne, plus précisément de la largeur angulaire des crêtes 2B les séparant, afin d'assurer un engagement complet du pêne 1A dans un logement lorsqu'il est positionné en butée contre la crête 2B adjacente à ce logement 2A. En pratique, elle correspond à quelques degrés de rotation de la colonne de direction 2.

## Revendications

1. Procédé de protection contre le vol d'un véhicule automobile consistant, à l'arrêt du moteur de ce véhicule, lors de la détection d'une intrusion (8) dans le véhicule, à déverrouiller automatiquement et temporairement l'antivol (1) de colonne de direction, à opérer une rotation automatique déterminée de la colonne de direction (2), dite de braquage et correspondante à une position braquée des roues directrices (5), et à verrouiller automatiquement l'antivol (1) de colonne de direction dans une position braquée des roues directrices (5).

2. Procédé selon la revendication précédente, **caractérisé en ce que** ladite rotation de braquage de la colonne de direction (2) du véhicule est contrôlée par une détermination du couple du volant (4) et est arrêtée si une roue (5) vient en butée contre un obstacle.

3. Procédé selon la revendication 1 ou 2, le véhicule automobile comportant une assistance électrique de direction (3), **caractérisé en ce que** la rotation de braquage est effectuée au moyen de cette assistance électrique (3).

4. Procédé selon l'une des revendications précédentes, **caractérisé en ce qu'**il comprend une détermination de la position du pêne. (1A) de l'antivol de colonne de direction (1) et à opérer au moyen de l'assistance électrique une rotation automatique déterminée supplémentaire de la colonne de direction (2), de verrouillage de l'antivol, lorsque qu'il est déterminé que le pêne (1A) n'est pas engagé dans un logement (2A) de la colonne.

5. Procédé selon la revendication précédente, **caractérisé en ce que** ladite rotation de verrouillage de l'antivol (2) est déterminée en fonction de la largeur angulaire des crêtes (2B) séparant les logements (2A) de la colonne.

## Patentansprüche

1. Verfahren zum Schutz gegen Diebstahl eines Kraftfahrzeugs, das darin besteht, beim Stillstand des Motors dieses Fahrzeugs, beim Erfassen eines Einbruchs (8) in das Fahrzeug, automatisch und vorübergehend die Diebstahlschutzvorrichtung (1) der Lenksäule zu entriegeln, eine bestimmte automatische Drehung der Lenksäule (2), Einschlagdrehung genannt und die einer eingeschlagenen Position der Lenkräder (5) entspricht, auszuführen, und die Diebstahlschutzvorrichtung (1) der Lenksäule automatisch in einer eingeschlagenen Position der Lenkräder (5) zu verriegeln.

2. Verfahren nach dem vorhergehenden Anspruch, **dadurch gekennzeichnet, dass** die Einschlagdrehung der Lenksäule (2) des Fahrzeugs durch eine Bestimmung des Drehmoments des Lenkrads (4) gesteuert wird und gestoppt wird, wenn ein Rad (5) zum Anschlag gegen ein Hindernis kommt.

3. Verfahren nach Anspruch 1 oder 2, wobei das Kraftfahrzeug eine elektrische Lenkhilfe (3) aufweist, **dadurch gekennzeichnet, dass** die Einschlagdrehung mittels dieser elektrischen Lenkhilfe (3) ausgeführt wird.

4. Verfahren nach einem der vorhergehenden Ansprüche, **dadurch gekennzeichnet, dass** es ein Bestimmen der Position des Schlossriegels (1A) der Diebstahlschutzvorrichtung der Lenksäule (1) aufweist und mittels der elektrischen Lenkhilfe eine bestimmte zusätzliche automatische Drehung der Lenksäule (2) zum Verriegeln der Diebstahlschutzvorrichtung ausführt, wenn bestimmt wird, dass der Schlossriegel (1A) nicht in eine Aufnahme (2A) der Lenksäule eingreift.

5. Verfahren nach dem vorhergehenden Anspruch, **dadurch gekennzeichnet, dass** die Verriegelungsdrehung der Diebstahlschutzvorrichtung (2) in Abhängigkeit von der Winkelbreite der Grate (2B), die die Aufnahme (2A) der Lenksäule trennen, bestimmt wird.

## Claims

1. A method for protecting against the theft of a motor vehicle, which comprises, when the engine of this vehicle is stopped, when an intrusion (8) into the vehicle is detected, automatically and temporarily unlocking the steering-column lock (1), carrying out a determined automatic rotation of the steering column (2), called a steering rotation and corresponding to a steered position of the steered wheels (5), and automatically locking the steering-column lock (1) in a steered position of the steered wheels (5).

2. The method as claimed in the preceding claim, **characterized in that** said steering rotation of the steering column (2) of the vehicle is monitored by a determination of the torque of the steering wheel (4) and is stopped if a wheel (5) butts against an obstacle.

3. The method as claimed in claim 1 or 2, the motor vehicle comprising electric power steering (3), **characterized in that** the steering rotation is carried out by means of this electric power steering (3).

4. The method as claimed in one of the preceding claims, **characterized in that** it comprises a determination of the position of the bolt (1A) of the steering-column lock (1) and carrying out by means of the electric power steering an additional determined automatic rotation of the steering column (2), for locking the steering lock, when it is determined that the bolt (1A) is not engaged in a recess (2A) of the column.

5. The method as claimed in the preceding claim, **characterized in that** said locking rotation of the steering lock (2) is determined as a function of the angular width of the peaks (2B) separating the recesses (2A) of the column.
